# EUROPEAN PATENT APPLICATION

(11) **EP 4 607 890 A1**
(43) Date of publication of application: **27.08.2025**
(21) Application number: 23890461.9
(22) Date of filing: 13.10.2023
(51) Int. Cl.: H04L 65/1083

(54) **CALL REQUEST PROCESSING METHOD, NETWORK NODE, AND STORAGE MEDIUM**

(30) Priority: 17.11.2022 CN 202211442260
(71) Applicant: ZTE CORPORATION, Shenzhen, Guangdong 518057 (CN)
(72) Inventor: LIU, Xiaojun, Shenzhen, Guangdong 518057 (CN); WANG, Chen, Shenzhen, Guangdong 518057 (CN); ZHAO, Shirong, Shenzhen, Guangdong 518057 (CN); SHAO, Bin, Shenzhen, Guangdong 518057 (CN)
(74) Representative: Ziebig Hengelhaupt Intellectual Property Attorneys Patentanwaltskanzlei PartGmbB
(86) International application number: PCT/CN2023/124439
(87) International publication number: WO 2024/104024

(57) **Abstract**

The present application provides a call request processing method, a network node, and a storage medium. The method comprises: after receiving a call request initiated by a user equipment (UE), determining whether to trigger an assisted localization function for a serving-call session control function (S-CSCF) network element; if the assisted localization function is triggered, forwarding the call request to an application server (AS) network element; receiving information of the S-CSCF network element corresponding to the UE fed back by the AS network element on the basis of the call request, wherein the AS network element pre-stores the correspondence between the UE and the S-CSCF network element; and on the basis of the information of the S-CSCF network element provided by the AS network element, forwarding the call request to the S-CSCF network element corresponding to the UE, so that the S-CSCF network element corresponding to the UE processes the call request.

## Description

### CROSS-REFERENCE TO RELATED APPLICATIONS

The present application claims priority to Chinese Patent Application No. 202211442260.5 filed on November 17, 2022 to the China Patent Office, and entitled "CALL REQUEST PROCESSING METHOD, NETWORK NODE, AND STORAGE MEDIUM", the entire content of which is incorporated herein by reference.

### TECHNICAL FIELD

The present application relates to the technical field of communications, in particular to a call request processing method, a network node, and a storage medium.

### BACKGROUND

An IP Multimedia Subsystem (IMS) is a brand-new form of multimedia service, which can meet the needs of terminal customers for more innovative and diversified multimedia services. The IMS is considered to be the core technology of next-generation communication networks and an important way to address the convergence of mobile and fixed-line networks and introduce differentiated services such as the triple convergence of voice, data and video.

In some cases, an IMS network contains a large number of network elements, and a call request from user equipment can be completed by mutual cooperation of a plurality of network elements, and abnormality of any one of the network elements or network links will result in failure of the call request. In order to meet the normal call request of users, there is an urgent need for a technical solution that can avoid the failure of the call request caused by abnormality of the network elements or network links.

### SUMMARY

The present application aims to provide a call request processing method, a network node, and a storage medium, which can reduce the probability of failure of a call request of user equipment caused by abnormality of network elements or network links.

In a first aspect, a call request processing method is provided, applied to an interrogating-call session control function (I-CSCF) network element, including: after receiving a call request initiated by user equipment (UE), determining whether to trigger an assisted localization function for a serving-call session control function (S-CSCF) network element; if the assisted localization function is triggered, forwarding the call request to an application server (AS) network element; receiving information, which is fed back by the AS network element on the basis of the call request, of an S-CSCF network element corresponding to the UE, where the AS network element pre-stores a correspondence between the UE and an S-CSCF network element; and on the basis of the information of the S-CSCF network element provided by the AS network element, forwarding the call request to the S-CSCF network element corresponding to the UE, such that the S-CSCF network element corresponding to the UE processes the call request.

In a second aspect, a call request processing method is provided, applied to an AS network element, including: receiving a call request forwarded by an I-CSCF network element, where the call request is initiated by UE; on the basis of a locally pre-stored correspondence between the UE and an S-CSCF network element, determining an S-CSCF network element corresponding to the UE; and transmitting to the I-CSCF network element information of the S-CSCF network element corresponding to the UE, such that the I-CSCF network element forwards, on the basis of the information of the S-CSCF network element, the call request to the S-CSCF network element corresponding to the UE for processing.

In a third aspect, a network node is provided, including: a processor; and a memory configured to store computer-executable instructions, where the executable instructions, when executed, implement the call request processing method in the first aspect or the second aspect.

In a fourth aspect, a computer-readable storage medium is provided, having one or more programs stored thereon, where the one or more programs, when executed by a network node including a plurality of application programs, implement the call request processing method in the first aspect or the second aspect.

### BRIEF DESCRIPTION OF DRAWING(S)

In order to more clearly describe the technical solutions of embodiments of the present application or in the related art, drawings that are to be referred for description of the embodiments or the related art will be briefly described hereinafter. Apparently, the drawings described hereinafter only illustrate some embodiments of the present application, and a person of ordinary skill in the art may also derive other drawings based on the drawings described herein without any creative effort.
FIG. 1 is a schematic flow diagram of a traditional call request.
FIG. 2 is a schematic flow diagram of a call request processing method according to embodiments of the present application.
FIG. 3 is another schematic flow diagram of a call request processing method according to embodiments of the present application.
FIG. 4 is a schematic flow diagram of a call request processing method corresponding to Example 1 according to embodiments of the present application.
FIG. 5 is a schematic flow diagram of a call request processing method corresponding to Example 2 according to embodiments of the present application.
FIG. 6 is a schematic flow diagram of a call request processing method corresponding to Example 3 according to embodiments of the present application.
FIG. 7 is a schematic flow diagram of a call request processing method corresponding to Example 4 according to embodiments of the present application.
FIG. 8 is a schematic flow diagram of a call request processing method corresponding to Example 5 according to embodiments of the present application.
FIG. 9 is a schematic flow diagram of a call request processing method corresponding to Example 6 according to embodiments of the present application.
FIG. 10 is a schematic flow diagram of a call request processing method corresponding to Example 7 according to embodiments of the present application.
FIG. 11 is a schematic structural diagram of a network node according to embodiments of the present application.

### DETAILED DESCRIPTION

In order to enable a person skilled in the art to better understand the technical solutions of this specification, a clear and complete description of the technical solutions in the embodiments of the present application is provided below with reference to the accompanying drawings in the embodiments of the present application. Apparently, the described embodiments are only a part of the embodiments of the present application, rather than all the embodiments. All other embodiments derived by a person of ordinary skill in the art from the embodiments of the specification without any creative effort fall within the scope of protection of the specification.

As mentioned above, an IMS network contains a large number of network elements in some cases, and a call request from user equipment can be completed by mutual cooperation of a plurality of network elements, and abnormality of any one of the network elements or network links will result in failure of the call request. In order to meet the normal call request of users, there is an urgent need for a technical solution that can avoid the failure of the call request caused by abnormality of the network elements or network links.

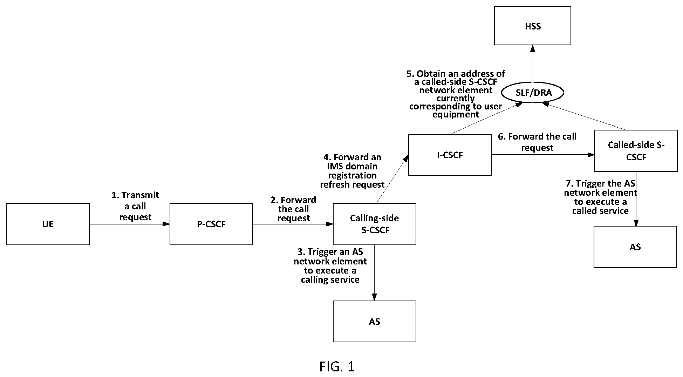

FIG. 1 is a schematic flow diagram of a traditional call request based on an IMS network. Under normal conditions, UE transmits a call request to a proxy-call session control function (P-CSCF) network element, the P-CSCF network element forwards the call request to a calling-side S-CSCF network element, and the calling-side S-CSCF network element triggers an AS network element to execute a calling service. Then, the calling-side S-CSCF network element forwards the call request to an I-CSCF network element. After receiving the call request, the I-CSCF network element obtains an address of a called-side S-CSCF network element corresponding to the UE from an HSS network element through a subscription locator functional (SLF) network element or a diameter routing agent (DRA) network element. Then, the I-CSCF network element forwards the call request to the called-side S-CSCF network element corresponding to the UE on the basis of the obtained address, the called-side S-CSCF network element triggers the AS network element to execute a called service, and the called-side S-CSCF network element then transmits the call request to called-side UE through the P-CSCF network element to complete the succession of the call request.

From the call request process shown in FIG. 1 above, it can be seen that the I-CSCF network element needs to query the HSS network element for the S-CSCF network element corresponding to the UE through the SLF network element or the DRA network element. If a link between the I/S-CSCF and the SLF/HSS (or DRA/HSS) is flashed off or fully disconnected, the SLF/HSS (or DRA/HSS) is overloaded or congested, or equipment is faulty, then the I-CSCF is not able to determine the S-CSCF corresponding to the UE, which results in the inability to forward the call request, and thus results in the failure of succession of a called-side call. S-CSCF network elements in an existing IMS network are generally deployed in a POOL mode in some cases, and there are dozens of sets of S-CSCF network elements. If the I-CSCF network element traverses to query the S-CSCF network elements, the query consumes high performance and time costs, and the performance requirements of call succession cannot be met.

Aiming at the above problems, the present application aims to provide a call request processing method in which a correspondence between UE and an S-CSCF network element is pre-stored by an AS network element, so that an I-CSCF network element with an assisted localization function for the S-CSCF network element is provided. After the I-CSCF network element receives a call request initiated by the UE, if it is unable to query an HSS network element for information of the S-CSCF network element corresponding to the UE, an assisted localization function for the S-CSCF network element is triggered, and the AS network element provides, on the basis of a correspondence between local UE and an S-CSCF network element, the information of the S-CSCF network element corresponding to the UE for the I-CSCF network element, such that the I-CSCF network element can forward the call request to the S-CSCF network element corresponding to the UE so as to process the call request by the S-CSCF network element corresponding to the UE, that is, the call request is continued at the called side. In practical applications, the I-CSCF network element may determine whether to query the HSS network element for the information of the S-CSCF network element corresponding to the UE on the basis of an actual link environment between the I-CSCF network element and the HSS. If the link environment between the I-CSCF network element and the HSS is not ideal, the I-CSCF network element promptly stops querying the HSS network element, and instead triggers the assisted localization function for the S-CSCF network element to query the AS network element for the information of the S-CSCF network element corresponding to the UE, so as to ensure that the call request initiated by the UE is continued, and thus improve the success rate of the call request to meet the normal call demand of users.

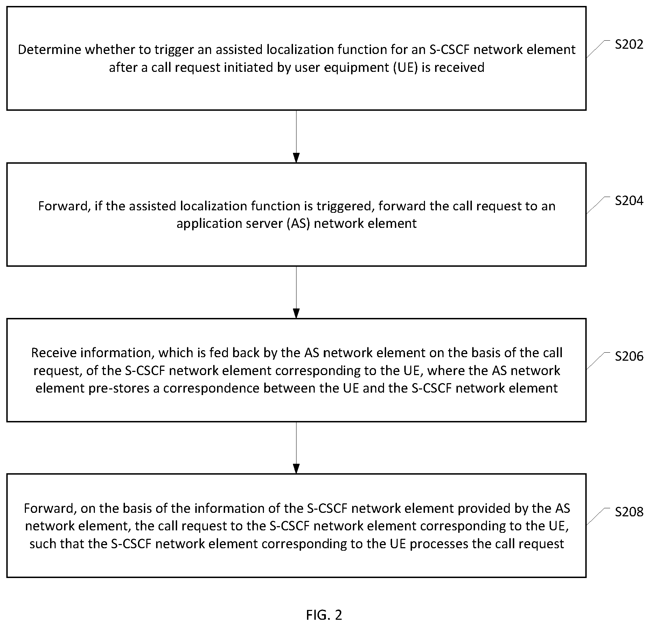

FIG. 2 is a schematic flow diagram of a call request processing method applied to an I-CSCF network element, and the call request processing method includes the following steps S202, S204, S206 and S208.

At S202, after a call request initiated by UE is received, whether to trigger an assisted localization function for an S-CSCF network element is determined.

With reference to the above, in the embodiment of the present application, the I-CSCF network element determines to trigger the assisted localization function for the S-CSCF network element when determining not to obtain information of an S-CSCF network element corresponding to the UE from an HSS network element.

The I-CSCF network element may determine, on the basis of a link environment between the I-CSCF network element and the HSS network element, whether to query the HSS network element for the information of the S-CSCF network element corresponding to the UE. For example, in the case that the link environment between the I-CSCF network element and the HSS network element is sound, the information of the S-CSCF network element corresponding to the UE is obtained through the HSS network element, and in the case that the link environment between the I-CSCF network element and the HSS network element is poor, the assisted localization function for the S-CSCF network element is triggered, and the S-CSCF network element corresponding to the UE is localized through an AS network element.

Referring to FIG. 1, in the IMS network, the I-CSCF network element queries the HSS network element for the information of the S-CSCF network element corresponding to the UE through an SLF network element or a DRA network element.

In some cases, if the I-CSCF network element is connected to the HSS network element through the SLF network element, on the basis of a local load balance strategy for the SLF network element and the link environment between the I-CSCF network element and the HSS network element, whether to obtain the information of the S-CSCF network element corresponding to the UE from the HSS network element through the SLF network element is determined.

The load balance strategy for the SLF network element may include: a single-user strategy, a user group strategy, a bureau-directed strategy, a whole-device strategy, etc., or a combination of these strategies. Illustratively, the single-user strategy may refer to: querying the SLF only once in 48 hours (configurable), randomly querying the SLF, querying the SLF network elements according to the configuration proportion (e.g., 20%), etc. The user group strategy and the bureau-directed strategy may refer to: querying the SLF for a configured number of times in configured time (e.g., 1,000 in 1 hour), randomly querying the SLF, querying the SLF according to the configuration proportion (e.g. 20%), etc. The whole-device strategy may refer to: starting to query the SLF network elements proportionally after exceeding the configured amount of messages (or traffic) (e.g., 80% query of the SLF if 50,000 messages are received per minute; 60% query of the SLF network elements if 100,000 messages are received per minute; no query of the SLF network elements if 200,000 messages are received per minute, etc.), and starting to query the SLF network elements proportionately after exceeding the configured CPU (e.g., 80% query of the SLF if the CPU exceeds 60%; 60% query of the SLF network elements if the CPU exceeds 70%; no query of the SLF network elements if the CPU exceeds 95%, etc.).

The link environment between the I-CSCF network element and the HSS network element may be determined by a message answering situation of the I-CSCF network element and SLF network element or a message answering situation of the SLF network element and the HSS network element, for example, the answering timeout indicates that the link environment between the I-CSCF network element and the HSS network element is poor.

That is, on the basis of the judgment strategies, the I-CSCF network element may flexibly decide whether to give up querying the HSS network element for the information of the S-CSCF network element corresponding to the UE on the basis of an actual load of the SLF network element and the actual link environment between the I-CSCF network element and the HSS network element.

Similarly, if the I-CSCF network element is connected to the HSS network element through the DRA network element, on the basis of a local load balance strategy for the DRA network element and the link environment with the HSS network element, whether to obtain the information of the S-CSCF network element corresponding to the UE from the HSS network element through the DRA network element is determined, which is not repeated herein.

At S204, if the assisted localization function is triggered, the call request is forwarded to the application server (AS) network element.

In the embodiment of the present application, after receiving a third-party registration request initiated by the UE after an IMS domain is registered, the AS network element may obtain the information of the S-CSCF network element corresponding to the UE from the HSS network element, and store a correspondence between the UE and the S-CSCF network element on the basis of the information of the S-CSCF network element corresponding to the UE.

That is, the I-CSCF network element needs to forward the call request to the AS network element that has previously handled the third-party registration request of the UE, such that the AS network element can provide the information of the S-CSCF network element corresponding to the UE.

Here, a consistent algorithm is used in the embodiment of the present application to ensure that the AS network element that processes the third-party registration request of the UE is kept highly consistent with the AS network element that receives the call request afterwards.

That is, after the UE transmits the third-party registration request to the S-CSCF network element, the S-CSCF network element performs consistent calculation on a UE identifier carried by the third-party registration on the basis of a consistent algorithm so as to determine the AS network element that matches the UE identifier. Then, the S-CSCF network element forwards the third-party registration request to the AS network element that matches the UE identifier for the processing, such that the AS network element that matches the UE identifier obtains the information of the S-CSCF network element corresponding to the UE from the HSS network element after the third-party registration request so as to store the correspondence between the UE and the S-CSCF network element.

Correspondingly, in this step, when the I-CSCF network element forwards the call request to the AS network element, consistent calculation is performed on the UE identifier carried in the call request on the basis of the same consistent algorithm so as to determine the AS network element that matches the UE identifier. Then, the I-CSCF network element forwards the call request to the AS network element that matches the UE identifier.

At S206, the information, which is fed back by the AS network element on the basis of the call request, of the S-CSCF network element corresponding to the UE is received, where the AS network element pre-stores the correspondence between the UE and an S-CSCF network element.

In this step, the AS network element may perform a matching query for the S-CSCF network element on the basis of the UE identifier in the call request. If the query succeeds, the information of the found S-CSCF network element is fed back to the I-CSCF network element.

At S208, on the basis of the information of the S-CSCF network element provided by the AS network element, the call request is forwarded to the S-CSCF network element corresponding to the UE, such that the S-CSCF network element corresponding to the UE processes the call request.

It should be noted that the S-CSCF network element described in this step refers to the called-side S-CSCF network element in FIG. 1.

The information of the S-CSCF network element may be an address of the S-CSCF network element or other information that can determine the address of the S-CSCF network element, which is not specifically limited herein.

Referring to the flow shown in FIG. 1, after receiving the call request, the called-side S-CSCF network element triggers the AS network element to execute a called service, and transmits the call request to the called-side UE through the P-CSCF network element so as to continue the call request.

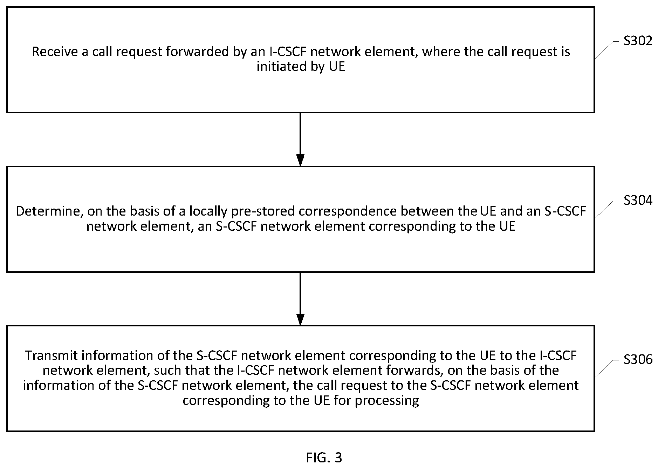

Correspondingly, FIG. 3 is a schematic flow diagram of a call request processing method applied to an AS network element according to embodiments of the present application, and the call request processing method specifically includes the following steps S302, S304 and S306.

At S302, a call request forwarded by an I-CSCF network element is received, where the call request is initiated by UE.

As mentioned above, after receiving the call request initiated by the UE, the I-CSCF network element determines, on the basis of a link environment between the I-CSCF network element and an HSS network element, whether to obtain information of an S-CSCF network element corresponding to the UE from the HSS network element; and if it is determined not to obtain the information of the S-CSCF network element corresponding to the UE from the HSS network element, it is determined to trigger an assisted localization function, so as to forward the call request to the AS network element.

At S304, on the basis of a locally pre-stored correspondence between the UE and an S-CSCF network element, an S-CSCF network element corresponding to the UE is determined.

In the embodiment of the present application, the UE may actively apply for the service of the assisted localization function. The AS network element may locally store subscription information of the UE for the assisted localization function after receiving that the UE successfully applies for the assisted localization function. After receiving the call request initiated by the UE, the AS network element first determines whether a user corresponding to the UE is a subscriber of the assisted localization function on the basis of the locally stored subscription information of the assisted localization function. If it is determined that the user corresponding to the UE is the subscriber, an S-CSCF network element corresponding to the UE is looked up on the basis of the locally stored correspondence between the UE and the S-CSCF network element.

At S306, the information of the S-CSCF network element corresponding to the UE is transmitted to the I-CSCF network element, such that the I-CSCF network element forwards, on the basis of the information of the S-CSCF network element, the call request to the S-CSCF network element corresponding to the UE for processing.

Similarly, the S-CSCF network element described in this step refers to the called-side S-CSCF network element. Referring to the flow shown in FIG. 1, after receiving the call request, the called-side S-CSCF network element triggers the AS network element to execute the called service, and then transmits the call request to the called-side UE through the P-CSCF network element, so as to continue the call request.

The call request processing method of the embodiments of the present application is described in detail below in combination with different examples.

### Example 1

In Example 1, a business and operation support system (BOSS) is responsible for providing UE with subscription of an assisted localization function for an S-CSCF network element. BOSS service issuance is the process in which operators configure user service data to enable the subscription, modification, and revocation of various services.

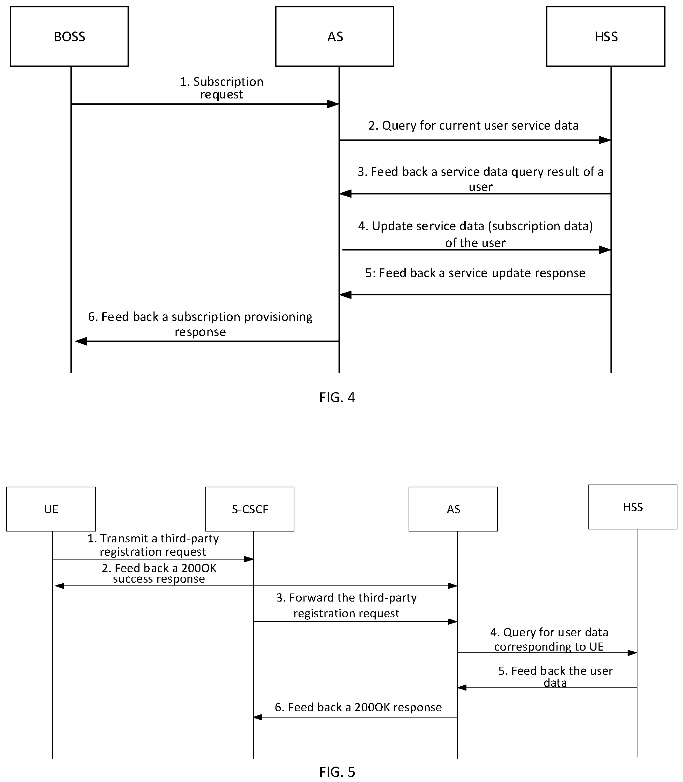

FIG. 4 shows a subscription process for an assisted localization function, including the following steps.

Step 1: on the basis of user's authorization, the BOSS initiates a subscription request, instructing to enable the assisted localization function of the S-CSCF network element (LOCSCSCF).

Step 2: an AS network element queries an HSS network element for service data of the current user on the basis of the number of a user provisioning request.

Step 3: the HSS network element returns a service data query result of the user.

Step 4: on the basis of the query result and a request message, the AS network element initiates a service data update for the user to the HSS network element, where service data to be updated includes subscription data for the assisted localization function of the user.

Step 5: the HSS network element feeds a service update response back to the AS network element.

Step 6: the AS feeds a subscription provisioning response to the assisted localization function back to the BOSS on the basis of an update result.

It should be noted that step 1 is an example of a user provisioning request. For already provisioned users, a service modification request may be initiated, and an S-CSCF lookup service is added on the basis of existing service issuance of the user. Step 4 is an example of Voice over Long-Term Evolution (VoLTE) service issuance, and the cooperating network element is the HSS network element. In case of Voice over New Radio (VoNR), the cooperating network element is a Unified Data Management (UDM) network element.

### Example 2

In Example 2, an AS network element supports an S-CSCF lookup service process when UE performs third-party registration. After the UE successfully registers to an IMS domain, an S-CSCF network element triggers third-party registration. The AS network element receives a third-party registration request, queries an HSS network element for a subscribed assisted localization function service, and stores S-CSCF address information if there is an S-CSCF lookup service. The corresponding process is as shown in FIG. 5, including the following steps.

Step 1: the UE initiates a third-party registration request, and the third-party registration request is transmitted to the S-CSCF network element after being processed by an intermediate network element.

Step 2: the S-CSCF network element successfully completes the registration process and feeds a 2000K success response back to the UE.

Step 3: the S-CSCF uses a consistent algorithm to determine one AS network element according to the number hash of the UE, and forwards the third-party registration request to the AS network element.

Step 4: after receiving the third-party registration request, the AS network element queries the HSS network element for user data corresponding to the UE.

Step 5: the AS network element receives the user data from the HSS and finds that the user corresponding to the UE has subscribed an assisted localization function, and then locally stores a correspondence between the UE and the S-CSCF in the user data.

Step 6: the AS network element feeds a 2000K response of third-party registration success back to the S-CSCF network element.

It should be noted that the AS network elements in an existing network are deployed in a pool mode, and there will be dozens of AS network elements. The S-CSCF must use a consistent algorithm to select one AS network element of third-party registration. When the UE subsequently initiates a call request, the I-CSCF network element may use the same consistent algorithm to trigger the call request to the same AS network element.

### Example 3

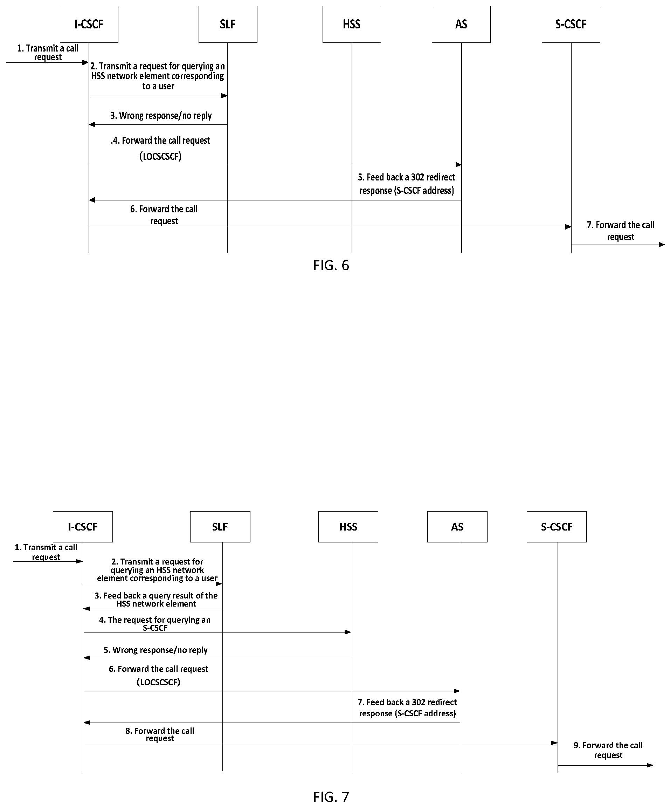

In Example 3, an I-CSCF network element queries an HSS network element for an S-CSCF network element corresponding to UE through an SLF network element. If a link between the I-CSCF network element and the SLF network element is flashed off or fully disconnected, the SLF is overloaded or congested, or equipment is faulty, through mutual cooperation of the I-CSCF network element and the AS network element, the call request can be correctly forwarded to the S-CSCF network element for fault tolerance processing. The corresponding process is as shown in FIG. 6, including the following steps.

Step 1: the call request of the UE is transmitted to the I-CSCF network element through other network elements.

Step 2: if the I-CSCF network element determines that the SLF is online, the I-CSCF network element transmits a request for querying the HSS network element corresponding to the UE to the SLF, and sets a response-waiting timer.

Step 3: the I-CSCF network element does not receive a response from the SLF network element (that is, the timer is timed out) or receives a wrong response.

Step 4: the I-CSCF network element forwards the call request to the AS network element of third-party registration according to a strategy. A call request signaling has the number of a called user, and the I-CSCF may use a consistent algorithm, such as on the basis f UE number hash, to select one AS network element, transmits the call request to the AS network element, and instructs the AS network element via signaling to perform the S-CSCF lookup assisted localization function (LOCSCSCF).

Step 5: after the call request is received, and it is determined that the call request is an S-CSCF lookup request and the user has subscribed to the S-CSCF lookup assisted localization function, the AS network element returns a corresponding S-CSCF address to the I-CSCF network element through a contact address of a 302 redirect response according to a locally stored correspondence between the user and the S-CSCF network element.

Step 6: after receiving the 302 redirect response, the I-CSCF network element obtains, on the basis of the contact, the S-CSCF network element where user registration is located, and transmits the call request to the S-CSCF network element.

Step 7: the S-CSCF network element continues the call processing.

It should be noted that step 2 and step 3 are optional, and the process may skip step 2 and step 3 and proceed directly to step 4 in two cases: (1) the I-CSCF network element determines that the SLF network element is faulty; and (2) the I-CSCF network element determines manual bypass of the SLF network element, etc.

### Example 4

In Example 4, an I-CSCF network element queries an HSS network element for an S-CSCF network element corresponding to UE through an SLF network element. If a link between the I-CSCF network element and the HSS network element is flashed off or fully disconnected, the HSS network element is overloaded or congested, or equipment is faulty, through mutual cooperation of the I-CSCF network element and the AS network element, the call request can be correctly forwarded to the S-CSCF network element for fault tolerance processing. The corresponding process is as shown in FIG. 7, including the following steps.

Step 1: the call request of the UE is transmitted to the I-CSCF network element through other network elements.

Step 2: if the I-CSCF network element determines that the SLF is online, the I-CSCF network element transmits a request for querying the HSS corresponding to the UE to the SLF, and sets a response-waiting timer.

Step 3: the I-CSCF network element receives a response for querying the HSS corresponding to the UE that is transmitted by the SLF, and cancels the timer set in step 3.

Step 4: the I-CSCF network element transmits a request for querying the S-CSCF where user registration is located to the HSS, and sets a response-waiting timer.

Step 5: the I-CSCF network element does not receive a response from the HSS network element (that is, the timer is timed out) or receives a wrong response.

Step 6: the I-CSCF network element forwards the call request to the AS network element of third-party registration according to a strategy. A call request signaling has the number of a called user, and the I-CSCF may use a consistent algorithm, such as on the basis of the UE number hash, to select one AS network element, transmits the call request to the AS network element, and instructs the AS network element via signaling to perform the S-CSCF lookup assisted localization function (LOCSCSCF).

Step 7: after the call request is received, and it is determined that the call request is an S-CSCF lookup request and the user has subscribed to the S-CSCF lookup assisted localization function, the AS network element returns a corresponding S-CSCF address to the I-CSCF network element through a contact address of a 302 redirect response according to a locally stored correspondence between the user and the S-CSCF network element.

Step 8: after receiving the 302 redirect response, the I-CSCF network element obtains, on the basis of the contact, the S-CSCF network element where user registration is located, and transmits the call request to the S-CSCF network element.

Step 9: the S-CSCF network element continues the call processing.

It should be noted that step 5 and step 6 are optional, and the process may skip step 2 and step 3 and proceed directly to step 7 in two cases: (1) the I-CSCF determines that the HSS network element is faulty; and (2) the I-CSCF network element determines manual bypass of the HSS, etc.

### Example 5

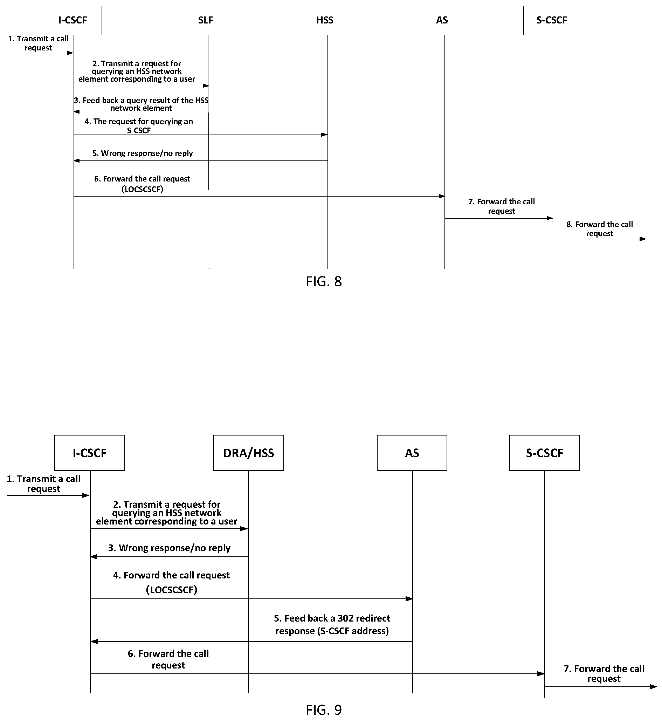

Example 5 is another implementation of Example 4. FIG. 8 is a schematic flow diagram of Example 5. Example 5 differs from Example 4 in that: in step 7 of Example 4, after receiving the call request, the AS determines that it is an S-CSCF lookup request, and returns the S-CSCF address to the I-CSCF through a contact address of a 302 redirect response, and the I-CSCF forwards the call to the S-CSCF according to the contact. In step 7 of Example 5, after receiving the call request, if it is determined that the call request is an S-CSCF lookup request and the user has subscribed to the assisted localization function of the S-CSCF network element lookup service, the AS network element directly transmits the call request to the S-CSCF network element according to the locally stored correspondence between the user and the S-CSCF network element.

It should be noted that in both Example 4 and Example 5 the call request can be continued, and the difference is that Example 4 does not require the I-CSCF to support 302, but rather the AS network element directly forwards the call request to the S-CSCF network element. When the AS network element forwards the call request, Record-Route is not added, such that only INVITE call request transactions (INVITE and subsequent 183, 180, 200 OK responses) are forwarded by the AS, and subsequent processes (PRACK, UPDATE, etc.) can be skipped over the AS network element, thereby reducing the performance requirements for the AS network element. In Example 4, after the AS network element forwards 302 to the I-CSCF, the call request processing is finished, and therefore, the processing performance is high.

### Example 6

In Example 6, an I-CSCF network element queries an HSS network element for an S-CSCF network element corresponding to UE through a DRA network element. The DRA network element and the HSS network element are combined into one DRA /HSS network element for introduction here. In the case that a link between the I-CSCF and the DRA /HSS is flashed off or fully disconnected, the DRA is overloaded or congested, or equipment is faulty, through mutual cooperation of the I-CSCF network element and an AS network element, the call request can be correctly forwarded to the S-CSCF network element for fault tolerance processing. The corresponding process is as shown in FIG. 9, including the following steps.

Step 1: the call request of the UE is transmitted to the I-CSCF network element through other network elements.

Step 2: if the I-CSCF network element determines that the DRA /HSS network element is online, the I-CSCF network element transmits a request for querying the S-CSCF where user registration is located to the DRA network element, and sets a response-waiting timer.

Step 3: the I-CSCF network element does not receive a response from the DRA/HSS network element (that is, the timer is timed out) or receives a wrong response.

Step 4: the I-CSCF network element forwards the call request to the AS network element of third-party registration according to a strategy. A call request signaling has the number of a called user, and the I-CSCF may use a consistent algorithm, such as on the basis of UE number hash, to select one AS network element, transmits the call request to the AS network element, and instructs the AS network element via signaling to perform the S-CSCF lookup assisted localization function (LOCSCSCF).

Step 5: after receiving the call request, if it is determined that the call request is an S-CSCF lookup request and the user has subscribed to the S-CSCF lookup assisted localization function, the AS network element returns a corresponding S-CSCF address to the I-CSCF network element through a contact address of a 302 redirect response according to a locally stored correspondence between the user and the S-CSCF network element.

Step 6: after receiving the 302 redirect response, the I-CSCF network element obtains, on the basis of the contact, the S-CSCF network element where user registration is located, and transmits the call request to the S-CSCF network element.

Step 7: the S-CSCF network element continues the call processing.

It should be noted that step 2 and step 3 are optional, and the process may skip step 2 and step 3 and proceed directly to step 4 in two cases: (1) the I-CSCF network element determines that the DRA/SLF network element is faulty; and (2) the I-CSCF network element determines that the manually bypass of DRA/SLF network element, etc.

### Example 7

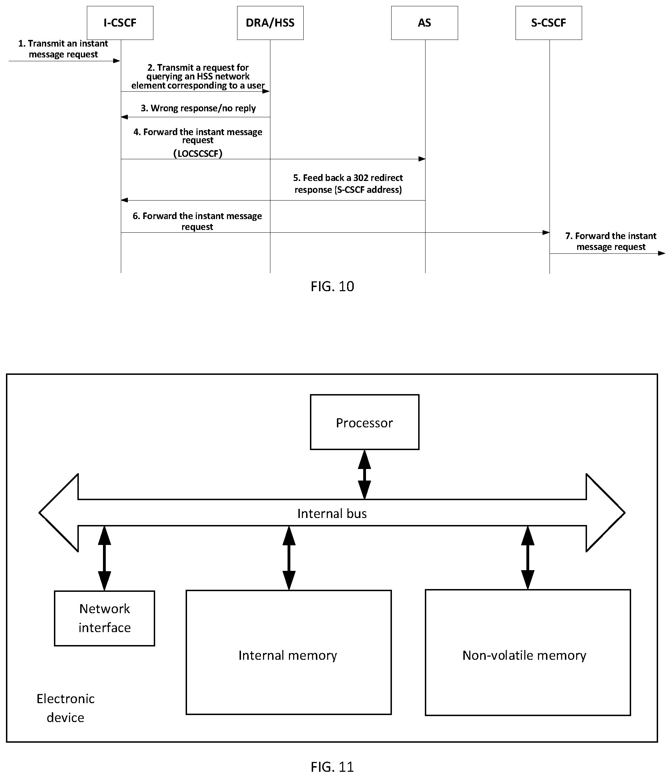

In Example 7, a call request initiated by UE is replaced with an instant message request. An I-CSCF network element queries an HSS network element for an S-CSCF network element corresponding to the UE through a DRA network element. The DRA network element and the HSS network element are combined into one DRA /HSS network element for introduction here. In the case that a link between the I-CSCF and the DRA /HSS is flashed off or fully disconnected, the DRA is overloaded or congested, or equipment is faulty, through mutual cooperation of the I-CSCF network element and an AS network element, the instant message request can be correctly forwarded to the S-CSCF network element for fault tolerance processing. The corresponding process is as shown in FIG. 10, including the following steps.

Step 1: the instant message request of the UE is transmitted to the I-CSCF network element through other network elements.

Step 2: if the I-CSCF network element determines that the DRA/HSS network element is online, the I-CSCF network element transmits a request for querying the S-CSCF where user registration is located to the DRA network element, and sets a response-waiting timer.

Step 3: the I-CSCF network element does not receive a response from the DRA/HSS network element (that is, the timer is timed out) or receives a wrong response.

Step 4: the I-CSCF network element forwards the call request to the AS network element of third-party registration according to a strategy. An instant message request signaling has the number of a called user, and the I-CSCF may use a consistent algorithm, such as on the basis of UE number hash, to select one AS network element, transmits the call request to the AS network element, and instructs the AS network element via signaling to perform the S-CSCF lookup assisted localization function (LOCSCSCF).

Step 5: after receiving the instant message request, if it is determined that the instant message request is an S-CSCF lookup request and the user has subscribed to the S-CSCF lookup assisted localization function, the AS network element returns a corresponding S-CSCF address to the I-CSCF network element through a contact address of a 302 redirect response according to a locally stored correspondence between the user and the S-CSCF network element.

Step 6: after receiving the 302 redirect response, the I-CSCF network element obtains, on the basis of the contact, the S-CSCF network element where user registration is located, and transmits the instant message request to the S-CSCF network element.

Step 7: the S-CSCF network element continues the instant message request.

FIG. 11 is a schematic structural diagram of a network node according to embodiments the present application. Referring to FIG. 11, at a hardware level, the network node includes a processor, and optionally further includes an internal bus, a network interface, and a memory. The memory may include an internal memory, such as a high-speed random-access memory (RAM), or may also include a non-volatile memory, such as at least one disk memory and the like. Of course, the network node may further include hardware required by other services.

The processor, the network interface, and the memory may be connected to each other via the internal bus, and the internal bus may be an industry standard architecture (ISA) bus, a peripheral component interconnect (PCI) bus, or an extended industry standard architecture (EISA) bus, and the like. The bus may be divided into an address bus, a data bus, a control bus, and the like. For ease of representation, FIG. 11 is represented by only one double sided arrow, but it does not mean that there is only one bus or one type of bus.

The memory is configured to store a program. Specifically, the program may include program codes, and the program codes include computer operating instructions. The memory may include the internal memory and the non-volatile memory and provides instructions and data to the processor.

In one implementation, the processor reads the corresponding computer program from the non-volatile memory into the internal memory and then runs the computer program, forming the I-CSCF network element shown in FIG. 2 above at a logical level. Correspondingly, the processor executes the program stored in the memory and is specifically configured to perform the following operations.

After receiving a call request initiated by UE, whether to trigger an assisted localization function for an S-CSCF network element is determined.

If the assisted localization function is triggered, the call request is forwarded to an AS network element.

Information, which is fed back by the AS network element on the basis of the call request, of the S-CSCF network element corresponding to the UE is received, where the AS network element pre-stores a correspondence between the UE and the S-CSCF network element.

On the basis of the information of the S-CSCF network element provided by the AS network element, the call request is forwarded to the S-CSCF network element corresponding to the UE, such that the S-CSCF network element corresponding to the UE processes the call request.

Alternatively, the processor reads the corresponding computer program from the non-volatile memory into the internal memory and then runs the computer program, forming the AS network element shown in FIG. 2 above at a logical level. Correspondingly, the processor executes the program stored in the memory and is specifically configured to perform the following operations.

The call request forwarded by the I-CSCF network element is received, where the call request is initiated by the UE.

On the basis of the locally pre-stored correspondence between the UE and an S-CSCF network element, an S-CSCF network element corresponding to the UE is determined.

The information of the S-CSCF network element corresponding to the UE is transmitted to the I-CSCF network element, such that the I-CSCF network element forwards, on the basis of the information of the S-CSCF network element, the call request to the S-CSCF network element corresponding to the UE for processing.

On the basis of an electronic node of the embodiment of the present application, the AS network element pre-stores the correspondence between the UE and the S-CSCF network element, thereby providing the I-CSCF network element with the assisted localization function for the S-CSCF network element. After the I-CSCF network element receives the call request initiated by the UE, if it is unable to query the HSS network element for the information of the S-CSCF network element corresponding to the UE, the assisted localization function for the S-CSCF network element is triggered, and the AS network element provides, on the basis of the correspondence between the local UE and the S-CSCF network element, the information of the S-CSCF network element corresponding to the UE for the I-CSCF network element, such that the I-CSCF network element can forward the call request to the S-CSCF network element corresponding to the UE so as to process the call request by the S-CSCF network element corresponding to the UE, that is, the call request is continued at the called side. In practical applications, the I-CSCF network element may determine whether to query the HSS network element for the information of the S-CSCF network element corresponding to the UE on the basis of an actual link environment with the HSS. If the link environment between the I-CSCF network element and the HSS is not ideal, the I-CSCF network element promptly stops querying the HSS network element, and instead triggers the assisted localization function for the S-CSCF network element to query the AS network element for the information of the S-CSCF network element corresponding to the UE, so as to ensure that the call request initiated by the UE is continued, and thus improve the success rate of the call request to meet the normal call demand of users.

The call request processing method disclosed in the above embodiments of the specification may be applied to the processor and implemented by the processor. The processor may be an integrated circuit chip that has a signal processing capacity. In an implementation process, all steps of the above method may be completed by an integrated logic circuit of hardware or an instruction in the form of software in the processor. The above processor may be a general-purpose processor, including a central processing unit (CPU), a network processor (NP), and the like; and may also be a digital signal processor (DSP), an application specific integrated circuit (ASIC), a field-programmable gate array (FPGA) or other programmable logic devices, discrete gate or transistor logic devices, and discrete hardware components. Various methods, steps, and logical block diagrams of the disclosure in the embodiment of the present application may be implemented or performed. The general-purpose processor may be a microprocessor, or any conventional processor, etc. The steps of the method disclosed in conjunction with the embodiment of the present application may be directly embodied to be executed and completed by a hardware decoding processor, or may be executed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory, and the processor reads information in the memory, and completes the steps of the above method in combination with its hardware.

In addition to the software example, the network node of the specification does not exclude other examples, such as a logic device or a combination of hardware and software, etc., which means that a subject of execution of the following processing flow is not limited to an individual logic unit, but may also be hardware or a logic device.

In addition, an embodiment of the present application further provides a computer-readable storage medium that stores one or more programs, and the one or more programs include instructions.

In one implementation, the above instructions, when executed by a portable network node including a plurality of application programs, enable the portable network node to perform the steps corresponding to the I-CSCF network element in the method shown in FIG. 2, including the following steps.

After receiving a call request initiated by UE, whether to trigger an assisted localization function for an S-CSCF network element is determined.

If the assisted localization function is triggered, the call request is forwarded to an AS network element.

Information, which fed back by the AS network element on the basis of the call request, of the S-CSCF network element corresponding to the UE is received, where the AS network element pre-stores a correspondence between the UE and an S-CSCF network element.

On the basis of the information of the S-CSCF network element provided by the AS network element, the call request is forwarded to the S-CSCF network element corresponding to the UE, so that the S-CSCF network element corresponding to the UE processes the call request.

Alternatively, the above instructions, when executed by a portable network node including a plurality of application programs, enable the portable network node to perform the steps corresponding to the AS network element in the method shown in FIG. 1, including the following steps.

The call request forwarded by the I-CSCF network element is received, where the call request is initiated by the UE.

On the basis of the locally pre-stored correspondence between the UE and an S-CSCF network element, an S-CSCF network element corresponding to the UE is determined.

The information of the S-CSCF network element corresponding to the UE is transmitted to the I-CSCF network element, such that the I-CSCF network element forwards, on the basis of the information of the S-CSCF network element, the call request to the S-CSCF network element corresponding to the UE for processing.

Those skilled in the art will appreciate that the embodiments of the specification may be provided as methods, systems or computer program products. Therefore, the specification may take the form of a full hardware embodiment, a full software embodiment or an embodiment combining software and hardware. Besides, the specification may adopt the form of a computer program product implemented on one or more computer available storage media (including but not limited to a disk memory, a CD-ROM, an optical memory and the like) including computer available program codes.

Specific embodiments of the specification are described above. Other embodiments are within the scope of the claims. In some cases, the actions or steps documented in the claims may be performed in a different order than in the embodiments and still achieve the desired results. Further, the processes depicted in the accompanying drawings do not necessarily require the particular sequence or successive sequences shown to achieve the desired results. In some implementations, multitasking and parallel processing may be possible or advantageous in some implementations.

The foregoing is merely embodiments of the specification, and is not intended to limit the specification. It will be apparent to those skilled in the art that various modifications and variations may be made to the specification. Any modifications, equivalents, improvements, etc. that come within the spirit and principle of the specification shall fall within the scope of the claims of the specification. In addition, all other embodiments obtained by a person of ordinary skill in the art without making creative work shall fall within the scope of protection of the present application.

## Claims

1. A call request processing method, applied to an interrogating-call session control function called I-CSCF network element, comprising:
determining, after receiving a call request initiated by user equipment called UE, whether to trigger an assisted localization function for a serving-call session control function called S-CSCF network element;
forwarding, upon the condition that the assisted localization function is triggered, the call request to an application server called AS network element;
receiving information, which is fed back by the AS network element on the basis of the call request, of an S-CSCF network element corresponding to the UE, wherein the AS network element pre-stores a correspondence between the UE and an S-CSCF network element; and
forwarding, on the basis of the information of the S-CSCF network element provided by the AS network element, the call request to the S-CSCF network element corresponding to the UE, such that the S-CSCF network element corresponding to the UE processes the call request.

2. The method according to claim 1, wherein
determining whether to trigger the assisted localization function for the S-CSCF network element comprises:
determining, on the basis of a link environment with a home subscriber server called HSS network element, whether to obtain the information of the S-CSCF network element corresponding to the UE from the HSS network element; and
determining, upon the condition that it is determined not to obtain the information of the S-CSCF network element corresponding to the UE from the HSS network element, to trigger the assisted localization function.

3. The method according to claim 2, wherein
the I-CSCF network element obtains the information of the S-CSCF network element corresponding to the UE from the HSS network element through a subscription locator functional called SLF network element or a diameter routing agent called DRA network element; and
determining, on the basis of the link environment between the I-CSCF network element and the HSS network element, whether to obtain the information of the S-CSCF network element corresponding to the UE from the HSS network element comprises:
determining, on the basis of a local load balance strategy for the SLF network element, and the link environment between the I-CSCF network element and the HSS network element, whether to obtain the information of the S-CSCF network element corresponding to the UE from the HSS network element through the SLF network element; or
determining, on the basis of a local load balance strategy for the DRA network element, and the link environment between the I-CSCF network element and the HSS network element, whether to obtain the information of the S-CSCF network element corresponding to the UE from the HSS network element through the SLF network element.

4. The method according to claim 2, wherein
the correspondence between the UE and an S-CSCF network element pre-stored by the AS network element is obtained from the HSS network element when the AS network element receives a third-party registration request, and the third-party registration request is initiated by the UE after an IP multimedia subsystem called IMS domain is registered.

5. The method according to claim 4, wherein
forwarding the call request to the AS network element comprises:
determining an AS network element which matches a UE identifier by performing consistent calculation on the UE identifier carried in the call request on the basis of a consistent algorithm; and
forwarding the call request to the determined AS network element.

6. A call request processing method, applied to an AS network element, comprising:
receiving a call request forwarded by an I-CSCF network element, wherein the call request is initiated by UE;
determining, on the basis of a locally pre-stored correspondence between the UE and an S-CSCF network element, an S-CSCF network element corresponding to the UE; and
transmitting to the I-CSCF network element information of the S-CSCF network element corresponding to the UE, such that the I-CSCF network element forwards, on the basis of the information of the S-CSCF network element, the call request to the S-CSCF network element corresponding to the UE for processing.

7. The method according to claim 6, wherein prior to receiving the call request forwarded by the I-CSCF network element, the method further comprises:
receiving a third-party registration request initiated by the UE after an IMS domain is registered;
obtaining the information of the S-CSCF network element corresponding to the UE from an HSS network element; and
storing, on the basis of the information of the S-CSCF network element corresponding to the UE, the correspondence between the UE and the S-CSCF network element.

8. The method according to claim 7, wherein
the third-party registration request is transmitted by the UE to the AS network element through the S-CSCF network element, and the S-CSCF network element performs consistent calculation on a UE identifier carried in the third-party registration request on the basis of a consistent algorithm, so as to determine the AS network element that receives the third-party registration request.

9. A network node, comprising: a processor; and a memory configured to store computer-executable instructions, wherein the executable instructions, when executed, implement the call request processing method according to any one of claims 1 to 8.

10. A computer-readable storage medium, having one or more programs stored thereon, wherein the one or more programs, when executed by a network node comprising a plurality of application programs, implement the call request processing method according to any one of claims 1 to 8.
